(19) Europäisches Patentamt
European Patent Office
Office européen des brevets

(11) **EP 4 273 529 B1**

(12) **EUROPEAN PATENT SPECIFICATION**

(45) Date of publication and mention
of the grant of the patent:
**04.12.2024 Bulletin 2024/49**

(21) Application number: **23382166.9**

(22) Date of filing: **23.02.2023**

(51) International Patent Classification (IPC):
**G01M 5/00** *(2006.01)*          **G01B 11/00** *(2006.01)*

(52) Cooperative Patent Classification (CPC):
**G01M 5/0091; G01B 11/16; G01M 5/0008**

(54) **SYSTEM FOR MEASURING DISPLACEMENT IN CIVIL STRUCTURES**

SYSTEM ZUR MESSUNG DER VERSCHIEBUNG VON ZIVILEN STRUKTUREN

SYSTÈME DE MESURE DE DÉPLACEMENT DANS DES STRUCTURES CIVILES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**08.11.2023 Bulletin 2023/45**

(73) Proprietor: **Infrastructures Sensing and
Monitoring, S.L.**
**28016 Madrid (ES)**

(72) Inventors:
• **Ramírez Vera, Luis**
**28700 San Sebastian de los Reyes (MADRID) (ES)**

• **Allona Alberich, Fernando**
**28029 MADRID (ES)**

(74) Representative: **Hernandez Lehmann, Aurelio
Lehmann & Fernandez, S.L.
Calle Álvarez de Baena, 4
28006 Madrid (ES)**

(56) References cited:
**WO-A1-2017/034773     AU-A1- 2016 308 995
KR-A- 20220 108 819     US-A1- 2017 228 883**

## Description

TECHNICAL FIELD

The present invention belongs to the technical field of the structural health monitoring for de maintenance of civil infrastructure, in particular a system for measuring displacement in civil structures based on vision through targets.

BACKGROUND ART

Structural health monitoring (SHM) is an essential tool for the effective maintenance of civil infrastructure, with a number of SHM systems employed in real-world applications.

Data acquisition of structural responses is a fundamental step in SHM systems where the data is subsequently processed for condition assessment and decision-making.

Displacement responses from a civil engineering structure are considered to be informative in evaluating the structure's current structural condition and safety. As it is directly related to structural stiffness and loadings, displacement can be an indicator of structural changes and excessive external loadings. For example, the plastic deformation ratios of building structures are estimated by drift displacement data.

Most design codes used in modern countries specify maximum displacement levels for civil structures to assure structural safety and usability. Thus, displacement information is commonly employed for infrastructure maintenance purposes.

Displacement sensors, such as linear variable differential transformers (LVDT) and strain-based displacement transducers, are widely adopted for conducting displacement measurements in practice.

These sensors are typically placed between a target point on a structure and a fixed reference point, measuring relative displacements. A sensor's installation requires additional supporting structures with respect to the fixed references that are often unavailable or difficult to prepare in field testing involving full-scale civil engineering structures. Furthermore, vibrations of the supporting structures can significantly degrade measurement accuracy. Thus, using traditional sensors to measure displacement responses from a full-scale structure is considered to be inefficient.

Recent research efforts have focused on effectively addressing this issue and providing a practical means for displacement measurement. These efforts include the development of indirect displacement estimation algorithms to convert other physical quantities, such as acceleration and strain, to displacement and the applicability for this purpose of relatively new sensors, including the laser Doppler vibrometer (LDV), global positioning systems (GPS) and computer vision-based approaches.

Precision in measurement is a fundamental aspect to record the behavior of a bridge deck against any external action and the passing of time. However, this precision is especially relevant to evaluate its behavior against the action of external loads such as the transit of vehicles, pedestrians or even wind. Depending on the type of structure, the amplitude of these oscillations can vary from several centimeters in the lightest or longest structures, to the order of a millimeter or a few millimeters in the most rigid structures. Having sufficient precision in measuring the vertical movement of a, i.e. a bridge deck is, therefore, a guarantee when it comes to identifying anomalous behavior, since the difference between the theoretical oscillation and the registered oscillation is a reliable parameter to identify early processes of deterioration or structural anomalies.

So, we conclude that measuring displacement with the required precision is a critical indicator of the condition of an infrastructure, but to assess the criticality of such measurement it is important that it is done in real time and under a continuous monitorization. All these factors together make of displacement monitorization a critical indicator of the infrastructure behavior in real time, supporting the comparison between the theoretical model of the infrastructure and the empirical one.

A significant amount of existing infrastructures require inspection. Thus, monitorization solutions capable of being easily installed on existing infrastructures are required. The easier to install and cost competitive, the better.

Autonomy is also a fundamental requirement for these displacement measuring solutions, as most of the times infrastructures are located in remote areas. So, to support the continuous operation in an unattended environment the solution must be designed attending this requirement.

Solutions described in the technical and scientific literature are, most of the times, tailor made solutions, costly ones or solutions requiring support, what makes then unsuitable for a generalized application.

There are currently a range of devices on the market that can be used to measure the deflection in bridge decks, although none of them constitutes an integral tool for the direct measurement of the deflection parameter.

There is below a brief description of different measurement systems available in the market and their limitations in relation to the precision of the measurement and their autonomy as monitoring systems.

Topography is a highly accurate direct measurement procedure, although it is not an unattended technology. Currently, there are robotic stations on the market capable of performing precision measurements and operating autonomously for a certain period of time, however, these are equipment with a permanent need for monitoring and surveillance. The absence of remote control over the measurement records may lead to possible undetected errors only revealed in the periodic download of the data to a computer and its subsequent processing which, in turn, requires intervention of specialized technicians in the instrumentation process. Likewise, this lack of remote control means that the monitoring of other operational parameters such as equipment status, power or battery condition must be carried out in the same location, once again requiring the intervention of a specialist technician.

Other systems for measuring vertical movement, such as GPS systems, digital distance meters or measuring movement by water levels, although they make direct measurements of the vertical movement, do not meet the precision required for the detection of very small range movement oscillations.

GPS measurement systems, with measurement errors of the order of centimeters, do not have sufficient precision to monitor the vertical movements of a bridge deck, since what is sought is high precision in the continuous recording of movements to detect any anomalous displacement, or out of range, of the deck on the passage of a moving load.

On the other hand, the digital distance meters that exist in the market work by emitting a laser signal to a target and calculating the time of flight that said signal takes to go back and forth the target, or the phase difference between emitted and reflected signals from the target. In this way, if we want to measure the vertical movement of a board, the EDM must measure the vertical distance between the deck and the ground. That is why, in this case, the target to which the laser signal is sent plays a fundamental role in the accuracy of the measurement obtained, but in turn it must be located on the surface of the obstacle saved (rivers, valleys, roads, etc.), being certainly complex that this objective surface remains invariable in time.

In the case of the measurement of movements by water levels, there are hydraulic instrumentation systems on the market capable of measuring the vertical movement by means of the variation of the height of a liquid contained in a container with respect to an initial height used as a reference. However, the accuracy of the measurement is influenced by various factors such as the presence of bubbles within the system, temperature changes, etc. It is also a technology that requires continuous maintenance for the deaeration of the liquid used.

There are also other systems on the market that make it possible to determine the vertical movements of a deck by indirectly measuring the elongation of a material attached to the surface of the bridge. This extensometric measurement procedure is based on the piezoresistive effect, that is, the property that some conductive and semiconductor materials have to vary their electrical resistance due to the effect of a deformation. In this way, once the deformation of the material is known, it is possible to know by applying formulas from classical mechanics the vertical displacement of the surface to which the element is attached. Among these measurement systems we find, for example, the extensometer bands embedded in the concrete or the fiber optic bands that allow their attached installation. In any case, these are indirect measurement systems that require post-processing of the recorded data. These systems usually must be embedded in the structure to measure, being this a complication when using them on existing structures.

Vision-based Sensing technologies possess the potential to address the issues in existing techniques. The existing vision-based methods differ by non-target approaches, feature detection, and coordinate transforms. The non-target approaches utilize noticeable features from a structure, which are tracked to measure displacement. Once a feature is detected, the position of the feature is transformed to the physical domain by using a coordinate transform. Several different transformation methods have been employed, such as simple scaling the affine transform, extrinsic parameters acquisition, and the homography transform.

Previous studies have shown the immense potential of computer vision for displacement sensing and other SHM applications. Several practical issues in computer vision-based displacement sensing have been identified in the literature, including the use of target markers, the selection of camera locations, and light-induced error.

The non-target approaches are convenient in that they do not need an installation of target markers. Despite the convenience, target-based measurement becomes useful when combined with the homography transform, which can greatly increase field applicability by allowing cameras to be arbitrarily placed. Regarding light-induced error, few studies have examined feature detection in a harsh field-testing environment, particularly those with adverse light conditions. Sunlight causes an image blur of target markers and thereby leads to significant error in finding features in the captured images.

As an example of the state of the art the following reference documents may be mentioned US2014/0168422 A1, WO2017/029905 A1 and JP6323929B2.

Document US2014/0168422 A1 defines a system for measuring a structural displacement of an object using one or more digital video cameras adapted to generate digital image information corresponding to two or more features of the object in a sequence of frames having a frame rate, one of the features being a substantially stationary feature and at least one of the features being a nonstationary feature. The system comprises an input to receive the digital image information corresponding to the two or more features, a converter, coupled to the input, configured to convert each frame of the digital image information corresponding to the two or more features into a template; and a comparator, coupled to the converter, to compare the templates in sequence and to subtract displacement of the substantially stationary feature to thereby measure spatial displacement of the at least one nonstationary feature over time.

This system uses displacement monitoring by processing video images with so-called vision-based displacement sensors, using one or more cameras.

In the reference document WO2017/029905 A1 it is determinate a system that captures with a single video camera a grating maker that is attached or transferred to an object surface and using the sampling Moiré method quantitatively finds by image processing the out-of-plane displacement amount from a minute charge in the phase of the grating pitch in an image due to out-of-plane displacement.

Document JP6323929B2 describes a measurement apparatus for easily measuring motion of a measurement object, such as a bridge girder, and a bridge inspection method. This measurement apparatus includes an imaging section and a processing section which processes image data output by the imaging section. The imaging section images a plurality of grid patterns arranged on the measurement object at predetermined time intervals, and output image data. The processing section calculates displacement of the grid patterns between two points of time with respect to each of image data in a plurality of image processing areas including the grid patterns. The displacement of the plurality of grid patterns 2 are calculated at a time.

The first document is a system without target and the second and third systems are based on vision through targets. In all the cases the systems present problems due to light-induced errors and don't allow continuous monitoring.

Document KR 2022/0108819 discloses a fixing element for fixing a sensor to a structure to be monitored, in particular a rail, a sensor unit having such a fixing element, a sensor device for fixing the sensor unit to the structure to be monitored, and a method for disposing the sensor unit. The fixing element has at least one light source, in particular a light-emitting diode.

AU 2016 308 995 A1 discloses a single digital (video) camera that captures a grating marker that is attached or transferred to an object surface, and using the sampling moire method quantitatively finds by image processing the out-of-plane displacement amount from a minute change in the phase of the grating pitch in an image due to out-of-plane displacement. Also, the sampling moire method is used to quantitatively find the out-of-plane/in-plane displacement amount from a minute change in the phase of the same grating due to in-plane/out-of-plane displacement, and finds the three-dimensional displacement amount by excluding the effect of the apparent in-plane displacement.

WO 2017/034773 A1 discloses a process for non-destructive testing, the process comprising: a) applying a photo-curable dye to a surface of an article; b) selectively curing an array of dots of the photo-curable dye on the surface; c) removing the photo-curable dye that has not been selectively cured; d) mechanically testing the article; and e) direct strain imaging the article during the mechanical testing based on the array of dots.

US 2017/228883 A1 discloses a method that includes generating image data of an interior of a fuel tank disposed within a wing of an aircraft, and determining, by a processing device, an amount of wing bending of the wing of the aircraft based on the generated image data of the interior of the fuel tank. The disclosed system generates, using one or more image capturing devices, reference image data of the interior of the fuel tank: and determines, based on the active image data and the reference image data, a displacement of one or more physical features of the interior of the fuel tank and determines the amount of wing bending based on the determined displacement of the one or more physical features.

Summarizing, it is necessary to find a system that meets certain important attributes like a very precise displacement measurement, a real-time and continuous monitorization, that it has an autonomous operation and a very competitive cost compared to existing alternative partial solutions. It also needs to be easy to install, both in existing infrastructures as well as in new infrastructures.

It is also relevant the recorded data, how it is managed and presented, so it is provided in a useful format for the decision maker with a minimum requirement of training effort.

## SUMMARY OF THE INVENTION

The system for measuring displacement in structures is defined in claim 1 and is based on vision through targets presented here, comprises one or more measuring devices wherein each measuring device is attachable to a fixed area (i.e. stable surface) of the structure and is associated with a target attachable to an area of the structure to be analyzed.

The target comprises an outward facing face with two or more through holes and an interior illumination device facing said holes.

In addition, each measuring device comprises a high resolution camera with a long focal length lens capable of continuously capturing images of a target, wherein the resolution value and focal length are determined as a function of the distance between the camera lens and the target.

Also, the measuring device presents a processing unit for processing said target images continuously and autonomously, capable of calculating the vertical and/or horizontal and/or angular variation of the area to be analyzed by detecting the target holes, calculating their centroid and comparing the position of said centroid in different image processing.

The measuring device comprises as well a wireless communications module of the processing unit with a web platform for storage, processing and presentation of the results comprising data analysis and control software, and means of autonomous power supply.

With this displacement measuring system for civil structures a significant improvement over the state of the art is obtained.

The improvement is primarily due to the fact that it is a vision-based sensing solution developed with two main objectives: first, to achieve highly precise measurements of the displacement of an infrastructure, i.e. a bridge deck, in the submillimeter range and, second, to operate as an unattended technology, that is, that data registered by the sensor are a direct measurement of the target parameter to be monitored and that data recording is autonomously done by the system in real time.

The system is a target-based measurement system with the particularity that the target is internally illuminated to eliminate light-induced errors, and is able to work day and night, twenty four hours a day, seven days a week, in harsh environments with adverse light conditions. The system has been conceived as an unattended technology, that is, it performs a direct measurement of the parameter to be evaluated (vertical/horizontal/angular movement) and performs it autonomously. Measurement data are continuously reported and in real time to an on-line platform. Direct measurement facilitates the interpretation of the data by any user, without the need for technical support performing complex conversions or interpretations of the recorded data.

In addition, the system incorporates programmable alert thresholds that generate alarms when the registered value exceeds the threshold set for the structure under supervision, which further reinforces the autonomy of the equipment as a structure monitoring system.

**BRIEF DESCRIPTION OF THE DRAWINGS**

To complete the description and in order to provide for a better understanding of the invention, a set of drawings is provided. Said drawings form an integral part of the description and illustrate preferred embodiments of the invention, which should not be interpreted as restricting the scope of the invention, but just as an example of how the invention can be embodied. The drawings comprise the following figures:

Figure 1.- Shows a schematic diagram of a system for measuring displacement in structures based on vision through targets.

Figure 2.- Shows a schematic block diagram of the configuration of a measuring device.

Figure 3.- Shows a schematic diagram of the configuration of the target.

Figure 4.- Shows a schematic block diagram of the configuration of the processing unit.

Figure 5.- Shows a schematic example of use of the system to measure the mid-span (Y) of a bridge deck.

Figure 6.- Shows an example of installation of the system on a bridge to measure the mid-span (Y) of a bridge deck.

Figure 7.- Shows a schematic diagram showing a vision-based system for measuring horizontal displacement of an object.

Figure 8.- Shows a schematic diagram showing a vision-based system for measuring angular displacement of an object.

Figure 9.- Shows a schematic block diagram showing the logic processing steps of the processing unit.

Figure 10.- Shows an image of the target with the selected region of interest (ROI) selected.

Figure 11.- Shows a binarized image of the region of interest (ROI).

Figure 12.- Shows a noise filtered image of the region of interest (ROI).

Figure 13.- Shows a graphic of the displacement data for 24 hour period an image.

Figure 14.- Shows an example of discrete LED's illumination of the target.

Figure 15.- Shows an example of LED bar illumination of the target.

Throughout the drawings, the same reference numerals and characters, unless otherwise stated, are used to denote like features, elements, components or portions of the illustrated embodiments. Moreover, while the disclosed invention will now be described in detail with reference to the Figs., it is done so in connection with the illustrative embodiments.

**DETAILED DESCRIPTION OF THE PREFERRED EMBODIMENTS**

In view of the figures provided, it can be observed how in a preferred embodiment of the invention, the system for measuring displacement in structures based on vision through targets proposed here comprises one or more measuring devices (1) wherein each measuring device (1) is attached to a fixed area and is associated with a target (2) attached to an area of the structure to be analyzed. The fixed area on which the measuring device is attached can be a stable surface that is part of the structure under analysis or it can be a stable surface outside the structure (a nearby ground surface or a surface of a different structure).

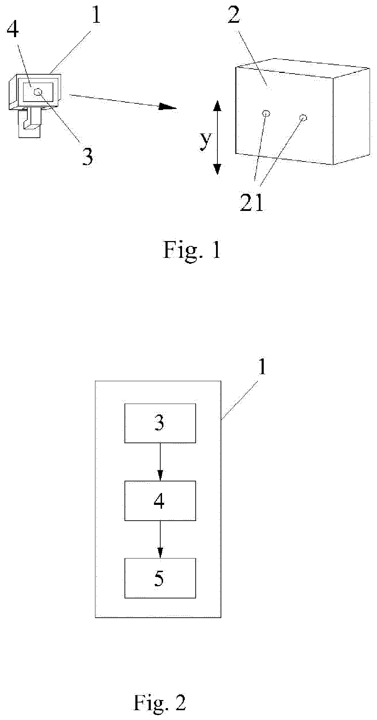

As show in figures 1, 3 and 6, the target (2) comprises an outward facing face with two or more through holes (21) and an interior illumination device (6) facing said holes (21).

As depicted in figure 1, each measuring device (1) comprises a high resolution camera (4) with a long focal length lens (3) capable of continuously capturing images of a target (2), where the resolution value and focal length are determined as a function of the distance between the camera lens (3) and the target (2).

The measuring device (1) presents a processing unit (5) for processing said target (2) images continuously and autonomously, capable of calculating the vertical (y) and/or horizontal (x) and/or angular ($\alpha$) variation of the area to be analyzed by detecting the target holes (21), calculating their centroid and comparing the position of said centroid in different image processing.

The measuring device (1) further comprises a wireless communications module (13) of the processing unit (5) with a web platform for storage, processing and presentation of the results, comprising data analysis and control software, and means of autonomous power supply.

In the present invention, an image of an internally illuminated target (2) as shown in Fig. 1 is captured and processed by the measuring device (1) to calculate the displacement of a civil structure.

The image obtained from a high megapixel camera (4) as shown in Fig. 2 is processed by the processing unit (5).

The combination of a high megapixel camera (4) and a long focal length lens (3) (for example, a 12-megapixel, 4056 x 3040 pixels, camera and a 200 mm lens) results in an actual pixel width of less than one millimeter for distances between the measuring device (1) and the target (2) up to 60 meters. The number of pixels of the camera (4) and the focal length of the lens (3), as indicated, can be adapted to the required distance between the measuring device (1) and the target (2). The actual pixel width Px,y (mm) is calculated dividing the distance in millimeters between the centers of the circles of the target (2) by the number of pixels in the image between the centers of the circles.

The internal illumination device (6) improves the contrast to eliminate light-induced errors. In one embodiment the lighting device comprises means of wireless connection to the processing unit (5) so that the illumination device (6) can be controlled by this processing unit (5) to be adapted to the external light conditions. This solve limitation of previous systems and make this system able to work day and night, twenty four hours a day, seven days a week, in harsh environments with adverse light conditions

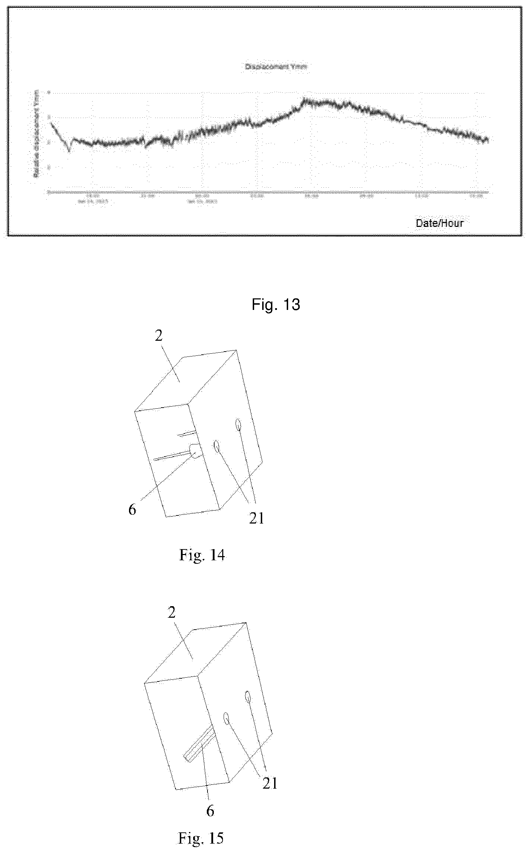

In the exemplary embodiment shown in Fig 14, the illumination device (6) comprises a low power led, in particular a microled (22). In other embodiments different types of Illumination devices (6) may be used like an SMD led module or a COB led module or devices comprising fiber optics and light diffusers or a combination of them. Figure 15 shows a combination of SMD / COB modules and stripes (23).

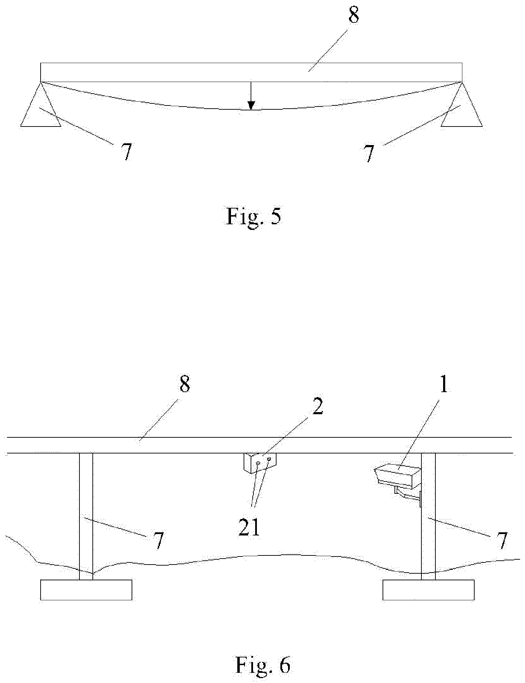

In the exemplary embodiment depicted in Fig. 6, the measuring device (1) is installed in a fixed area of the structure, in this case the bridge pier (7), and the target (2) is installed in the bridge deck (8) to measure the mid-span (Y) as shown in Fig. 5. This vision-based displacement measurement system can be installed in any in-service structure to measure displacement as shown in Fig. 6.

Due to the low power requirements, in this embodiment the autonomous power supply means comprises a battery arranged inside the device and a solar panel connected to the inner battery. In others embodiments the system can be powered by wind power generators generator connected to the interior battery or any other autonomous power system.

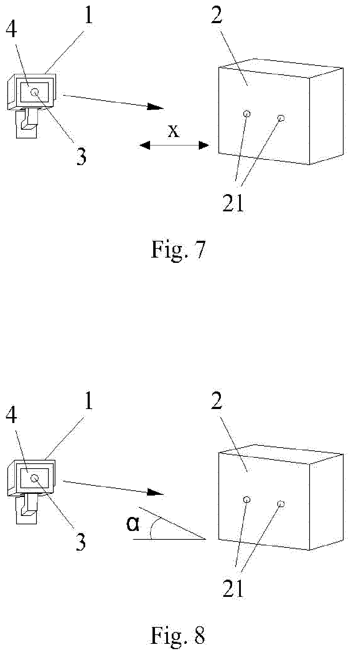

This vision-based displacement measurement system can measure vertical (y), horizontal (x) and angular ($\alpha$) displacement of any infrastructure as shown in Fig. 1, Fig. 7 and Fig. 8

In a preferred embodiment the target (2) has two target holes (21) configured as circular orifices but in other embodiments the target (2) can have a different number of target holes (21) and the orifices can have a different shapes.

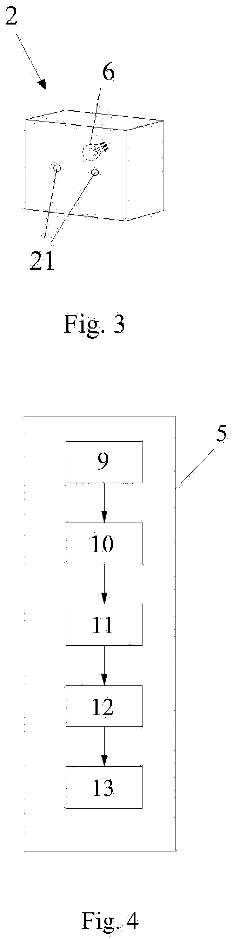

Figure 4 shows a schematic block diagram of the steps performed by the processing unit (5). The processing unit (5) continuously performs the image acquisition process (9). Then the image processing (10) is in charge of detecting the two circular target holes (21) of the target (2) and calculating the centroid coordinates of the circles.

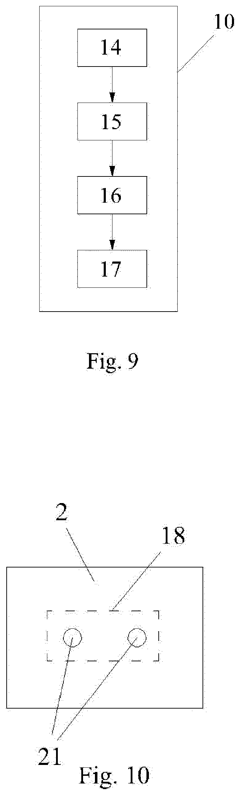

This step of image processing (10) involves several steps as shown in Fig. 9.

The first step is the region of interest (ROI) selection (14), this ROI (18) is the area of the image that will be further processed as shown in Fig. 10.

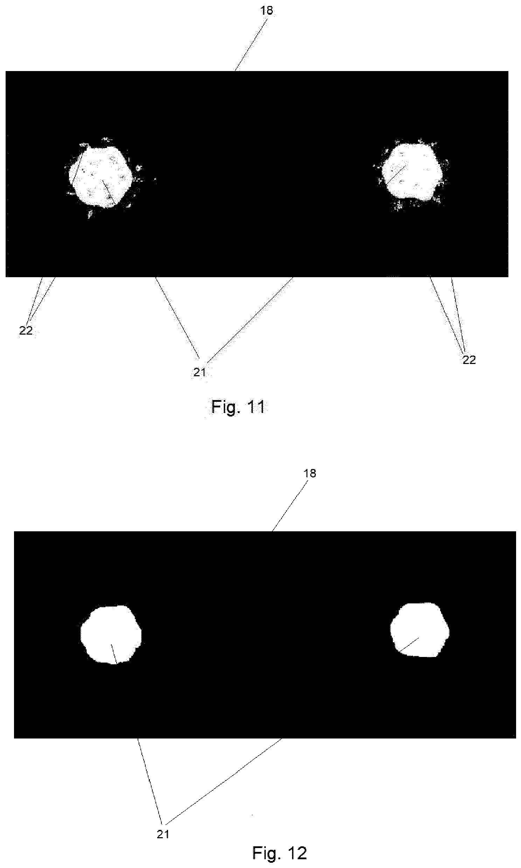

Next, binarization (15) of the cropped image is performed using a thresholding method as show in Fig. 9. This binarized image (20) helps in clearly separating the circles from the background as shown in Fig. 11.

A "binarized image" (20) is the result of converting the original image to black and white. Since for the purposes of the present invention only the two "big bright spots" corresponding to the target holes (21) are of interest, the best way is to "separate" them from the background (which, although black, is not a pure black in the image produced by any camera).

Figure 11 shows some white "minor spots" (22). These are "glows" which correspond to flashes produced by any lens when there are very bright spots on a dark background. Glare can also be produced by reflections of powerful lights or the sun on the target.

The next step is a noise reduction process (16), as show in Fig. 9 This process of noise reduction through morphological transformations such as erosion and dilation generates an image like the one shown in Figure 12.

Morphological transformations basically clean up an image that is already black and white. Morphological transformations are some operations based on the image shape. Usually, as in this case, they are performed on binary images. It needs two inputs, one is the original image, second one is called structuring element or kernel which decides the nature of operation. Two basic morphological operators are Erosion and Dilation:

- The basic idea of erosion is eroding away the boundaries of foreground object (Always try to keep foreground in white). The kernel slides through the image (as in 2D convolution). A pixel in the original image (either 1 or 0) will be considered 1 only if all the pixels under the kernel is 1, otherwise it is eroded (made to zero). So, what happens is that, all the pixels near boundary will be discarded depending upon the size of kernel. The thickness or size of the foreground object decreases or simply white region decreases in the image. It is useful in the present case for removing small white noises.
- Dilation it is just opposite of erosion. Here, a pixel element is '1' if at least one pixel under the kernel is '1'. So, it increases the white region in the image or size of foreground object increases. Normally, in cases like noise removal, erosion is followed by dilation. Because, erosion removes white noises, but it also shrinks our object. So, we dilate it. Since noise is gone, they won't come back, but our object area increases.

The target holes (21) in this embodiment are circular and the image should ideally look like this. But due to the flashes and the fact that the "ideal" does not exist, the image does not come out perfectly circular (in the attached figures this deformation has been exaggerated for a better understanding of the process).

The final objective is that only the two "big spots" corresponding to the target holes (21) are left so that the necessary precision can be achieved when calculating the centroid.

The final step of the image processing (10) is the centroid calculation (17) as shown in Fig. 9. The centroid of a shape is the arithmetic mean (i.e. the average) of all the points in a shape.

Suppose a shape consists of $n$ distinct points $X_1 ... X_n$, then the centroid is given by

$$c = \frac{1}{n} \sum_{i=1}^{n} x_i$$

In the context of image processing and computer vision, each shape is made of pixels, and the centroid can be calculated using Image Moments. Image Moment, $M_{ij}$, is a particular weighted average of image pixel intensities $I(x,y)$ and are calculated by:

$$M_{ij} = \sum_x \sum_y x^i y^j I(x, y)$$

The centroid (center of gravity) is given by the formula:

$$C_x = \frac{M_{10}}{M_{00}}$$

$$C_y = \frac{M_{01}}{M_{00}}$$

$C_x$ is the x coordinate and $C_y$ is the y coordinate of the centroid and M denotes the Moment.

Once the centroids are computed, the pixel displacement is calculated subtracting the values of the previously acquired image.

Once we have obtained the image processing (10), the next step performed by the processing unit (5), as shown in Figure 4, is the displacement calculation process (11) that determines the corresponding distance to the pixel movement through a simple scaling coordinate transformation. Simple scaling multiplies the scaling factor (actual pixel width Px,y in mm) to the measured image pixel coordinate displacement. Due to the small actual pixel width, submillimeter precision can be obtained with simple scaling and low computational load, and there is no need to apply more complex subpixel analysis algorithms, as the one disclosed in Fukuda et al., "Vision-Based Displacement Sensor for Monitoring Dynamic Response Using Robust Object Search Algorithm." IEEE Sensors Journal, 13:12 (December, 2013). This low computational load permits the use of an unattended low power embedded processor in the processing unit (5).

The threshold alert process (12) generates alerts with predefined thresholds and the data is sent to the web platform through the wireless communication module (13). The displacement data is then presented in a graphic window as shown in Fig. 13.

The preceding processes are provided for purpose of illustration rather than limitation.

In this text, the term "comprises" and its derivations (such as "comprising", etc.) should not be understood in an excluding sense, that is, these terms should not be interpreted as excluding the possibility that what is described and defined may include further elements, steps, etc. On the other hand, the invention is obviously not limited to the specific embodiment(s) described herein, but also encompasses any variations that may be considered by any person skilled in the art (for example, as regards the choice of materials, dimensions, components, configuration, mechanical design, etc.), within the scope of the invention as defined in the claims.

### Claims

1. A system for measuring displacement in civil structures based on vision through targets, comprising

   • A target (2)
   • One or more measuring devices (1) wherein each measuring device (1) is configured to be attached to a fixed area and is associated with the target (2) attachable to an area of the structure to be analyzed, wherein the target (2) comprises an outward facing face with two or more through holes (21) and an interior illumination device (6) facing said through holes (21), wherein each measuring device (1) comprises

   • a high resolution camera (4) with a long focal length lens (3) capable of continuously capturing images of the target (2), wherein the resolution value and focal length are determined as a function of the distance between the camera lens (3) and the target (2);
   • a processing unit (5) for processing said target (2) images continuously and autonomously, capable of calculating the vertical (y) and/or horizontal (x) and/or angular ($\alpha$) variation of the area to be analyzed by detecting the target holes (21), calculating their centroid and comparing the position of said centroid in different image processing;
   • a wireless communications module (13) of the processing unit (5) with a web platform for storage, processing and presentation of the results comprising data analysis and control software, and;
   • means of autonomous power supply.

2. The system according to claim 1 wherein, the centroid displacement calculation process (11) that determines the corresponding distance to a pixel movement is performed through a simple scaling coordinate transformation multiplying a scaling factor (actual pixel width Px,y in mm) to a measured image pixel coordinate displacement.

3. The system according to claim 1 or 2 wherein the illumination device (6) comprises means of wireless connection to the processing unit.

4. The system according to any of claims 1 - 3, wherein the illumination device (6) comprises a microled.

5. The system according to any of claims 1 - 3, wherein the illumination device (6) comprises a Surface Mounted Device (SMD) led module or a Chip on Board (COB) led module.

6. The system according to any of claims 1 - 3, wherein the illumination device (6) comprises fiber optics and light diffusers.

7. The system according to any of the previous claims, wherein the autonomous power supply means comprises a battery arranged inside the device.

8. The system according claim 7, wherein the autonomous power supply means comprises a solar panel connected to the battery.

9. The system according claim 7, wherein the autonomous power supply means comprises a wind power generator connected to the inner battery.

10. The system according to any of the previous claims, wherein the target holes (21) are circular.

11. The system according to any of the previous claims, wherein the fixed area on which the measuring device (1) is configured to be attached to is a surface that is part of the structure under analysis.

### Patentansprüche

1. System zum Messen einer Verschiebung in Bauwerksstrukturen basierend auf Sicht durch Ziele, welches Folgendes umfasst:

   • ein Ziel (2),
   • eine oder mehrere Messungsvorrichtungen (1), wobei jede Messungsvorrichtung (1) dazu konfiguriert ist, an einem festen Bereich angebracht zu werden, und mit dem Ziel (2) assoziiert ist, das an einem Bereich der zu analysierenden Struktur anbringbar ist, wobei das Ziel (2) eine nach außen gewandte Fläche mit zwei oder mehr Durchgangslöchern (21) und eine innere Beleuchtungsvorrichtung (6) umfasst, die den Durchgangslöchern (21) zugewandt ist,

   wobei jede Messungsvorrichtung (1) Folgendes umfasst:

   • eine hochauflösende Kamera (4) mit einem Objektiv (3) mit langer Brennweite, das zum kontinuierlichen Erfassen von Bildern des Ziels (2) in der Lage ist, wobei der Auflösungswert und die Brennweite als eine Funktion der Entfernung zwischen dem Kameraobjektiv (3) und dem Ziel (2) bestimmt werden;
   • eine Verarbeitungseinheit (5) zum kontinuierlichen und autonomen Verarbeiten von Bildern des Ziels (2), welche zum Berechnen der vertikalen (y) und/oder horizontalen (x) und/oder Winkel(a)-Variation des zu analysierenden Bereichs durch Detektieren der Ziellöcher (21), Berechnen ihres Schwerpunkts und Vergleichen der Position des Schwerpunkts bei verschiedener Bildverarbeitung in der Lage ist;
• ein Drahtloskommunikationsmodul (13) der Verarbeitungseinheit (5) mit einer Web-Plattform zur Speicherung, Verarbeitung und Präsentation der Ergebnisse, umfassend Datenanalyse und Steuersoftware, und;
• ein Mittel zur autonomen Stromversorgung.

2. System nach Anspruch 1, wobei der Schwerpunktverschiebungsberechnungsprozess (11), der die entsprechende Entfernung zu einer Pixelbewegung bestimmt, durch eine einfache Skalierungskoordinatentransformation durchgeführt wird, die einen Skalierungsfaktor (tatsächliche Pixelbreite, Px,y in mm) mit einer gemessenen Bildpixelkoordinatenverschiebung multipliziert.

3. System nach einem der Ansprüche 1 oder 2, wobei die Beleuchtungsvorrichtung (6) ein Mittel zur drahtlosen Verbindung mit der Verarbeitungseinheit umfasst.

4. System nach einem der Ansprüche 1-3, wobei die Beleuchtungsvorrichtung (6) eine Mikro-LED umfasst.

5. System nach einem der Ansprüche 1-3, wobei die Beleuchtungsvorrichtung (6) ein Oberflächenmontierte-Vorrichtung(SMD: Surface Mounted Device)-LED-Modul oder ein Chip-auf-Platine(COB: Chip On Board)-LED-Modul umfasst.

6. System nach einem der Ansprüche 1-3, wobei die Beleuchtungsvorrichtung (6) Faseroptikelemente und Lichtdiffusoren umfasst.

7. System nach einem der vorhergehenden Ansprüche, wobei das autonome Stromversorgungsmittel eine Batterie umfasst, die innerhalb der Vorrichtung angeordnet ist.

8. System nach Anspruch 7, wobei das autonome Stromversorgungsmittel ein Solarpanel umfasst, das mit der Batterie verbunden ist.

9. System nach Anspruch 7, wobei das autonome Stromversorgungsmittel einen Windstromgenerator umfasst, der mit der inneren Batterie verbunden ist.

10. System nach einem der vorhergehenden Ansprüche, wobei die Ziellöcher (21) kreisförmig sind.

11. System nach einem der vorhergehenden Ansprüche, wobei der feste Bereich, an dem die Messungsvorrichtung (1) gemäß ihrer Konfiguration angebracht werden soll, eine Oberfläche ist, die ein Teil der analysierten Struktur ist.

**Revendications**

1. Système pour mesurer le déplacement dans des structures civiles en se basant sur la vision à travers des cibles, comprenant :

• une cible (2)
• un ou plusieurs dispositifs de mesure (1), chaque dispositif de mesure (1) étant configuré de façon à être attaché à une zone fixe et étant associé à la cible (2) attachable à une zone de la structure à analyser, la cible (2) comportant une face tournée vers l'extérieur avec deux trous traversants (21) ou plus et un dispositif d'éclairage intérieur (6) faisant face auxdits trous traversants (21), chaque dispositif de mesure (1) comprenant :

• une caméra à haute résolution (4) avec un objectif à longue distance focale (3) capable de capturer continuellement des images de la cible (2), la valeur de la résolution et la distance focale étant déterminées en fonction de la distance entre l'objectif de la caméra (3) et la cible (2) ;
• une unité de traitement (5) pour traiter lesdites images de la cible (2) continuellement et de manière autonome, capable de calculer la variation verticale (y) et/ou horizontale (x) et/ou angulaire (a) de la zone à analyser en détectant les trous de la cible (21), en calculant leur centroïde et en comparant la position dudit centroïde en traitant différentes images ;
• un module de communication sans fil (13) de l'unité de traitement (5) avec une plateforme web pour le stockage, le traitement et la présentation des résultats comprenant un logiciel d'analyse des données et de commande, et
• un moyen d'alimentation électrique autonome.

2. Système selon la revendication 1, dans lequel le processus de calcul de déplacement du centroïde (11) qui détermine la distance correspondant à un mouvement de pixels est exécuté au moyen d'une simple transformation de coordonnées de mise à l'échelle en multipliant un facteur d'échelle (largeur réelle de pixels Px,y en mm) en un déplacement mesuré de coordonnées de pixels d'image.

**3.** Système selon la revendication 1 ou 2, dans lequel le dispositif d'éclairage (6) comprend un moyen de connexion sans fil à l'unité de traitement.

**4.** Système selon l'une quelconque des revendications 1 à 3, dans lequel le dispositif d'éclairage (6) comprend une micro-diode électroluminescente.

**5.** Système selon l'une quelconque des revendications 1 à 3, dans lequel le dispositif d'éclairage (6) comprend un module LED monté en surface (SMD) ou un module LED 'puce à bord' (COB).

**6.** Système selon l'une quelconque des revendications 1 à 3, dans lequel le dispositif d'éclairage (6) comporte des fibres optiques et des diffuseurs de lumière.

**7.** Système selon l'une quelconque des revendications précédentes, dans lequel le moyen d'alimentation électrique autonome comprend une batterie disposée à l'intérieur du dispositif.

**8.** Système selon la revendication 7, dans lequel le moyen d'alimentation électrique autonome comprend un panneau solaire connecté à la batterie.

**9.** Système selon la revendication 7, dans lequel le moyen d'alimentation électrique autonome comprend un générateur d'énergie éolienne connecté à la batterie interne.

**10.** Système selon l'une quelconque des revendications précédentes, dans lequel les trous de la cible (21) sont circulaires.

**11.** Système selon l'une quelconque des revendications précédentes, dans lequel la zone fixe sur laquelle est attaché le dispositif de mesure (1), selon sa configuration, est une surface qui fait partie de la structure étant analysée.

Fig. 1

Fig. 2

Fig. 3

Fig. 4

Fig. 5

Fig. 6

Fig. 7

Fig. 8

Fig. 9

Fig. 10

18

22

21

22

22

Fig. 11

18

21

Fig. 12

Fig. 13

Fig. 14

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140168422 A1
- WO 2017029905 A1
- JP 6323929 B
- KR 20220108819

- AU 2016308995 A1
- WO 2017034773 A1
- US 2017228883 A1

**Non-patent literature cited in the description**

- **FUKUDA et al.** Vision-Based Displacement Sensor for Monitoring Dynamic Response Using Robust Object Search Algorithm. *IEEE Sensors Journal,* December 2013, vol. 13, 12